(19) **Europäisches Patentamt / European Patent Office / Office européen des brevets**

(11) **EP 3 391 623 B1**

(12) **FASCICULE DE BREVET EUROPEEN**

(45) Date de publication et mention de la délivrance du brevet:
**01.09.2021 Bulletin 2021/35**

(21) Numéro de dépôt: **16826375.4**

(22) Date de dépôt: **14.12.2016**

(51) Int Cl.:
*H04L 29/08* (2006.01)    *H04L 12/28* (2006.01)

(86) Numéro de dépôt international:
**PCT/FR2016/053434**

(87) Numéro de publication internationale:
**WO 2017/103483 (22.06.2017 Gazette 2017/25)**

(54) **DÉPLOIEMENT DE SERVICE DANS UN RÉSEAU LOCAL**

BEREITSTELLUNG EINES DIENSTES IN EINEM LOKALEN NETZWERK

DEPLOYMENT OF A SERVICE IN A LOCAL AREA NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2015 FR 1562699**

(43) Date de publication de la demande:
**24.10.2018 Bulletin 2018/43**

(73) Titulaire: **ORANGE**
**92130 Issy-les-Moulineaux (FR)**

(72) Inventeur: **LANDAIS, Gilbert**
**35530 Servon sur Vilaine (FR)**

(56) Documents cités:
**US-A1- 2014 118 123    US-A1- 2015 046 534**

**Description**

Domaine technique

L'invention se rapporte au domaine des télécommunications et plus particulièrement aux terminaux communicants d'un réseau domotique.

Etat de la technique

Le domaine de la domotique traite de l'automatisation du domicile d'un utilisateur. Il regroupe un ensemble de services permettant l'intégration des technologies modernes dans la maison. Dans ce contexte, un réseau domotique est utilisé pour relier différents type de terminaux de la maison (électroménager, hifi, etc.) aptes à communiquer ensemble.
Un réseau domotique peut comporter un équipement routeur, ou simplement un concentrateur (hub) ou un commutateur (switch), élément intermédiaire assurant la redirection, ou routage, des paquets de données entre les différents terminaux qui lui sont connectés. Dans la suite on parlera indifféremment de « réseau domotique » ou de « réseau local ».
Un utilisateur a, dans ce contexte, la possibilité d'exécuter un service donné sur un terminal donné disposant de caractéristiques propres. Un tel service peut être vu comme l'utilisation d'un ensemble de composantes logicielles, ou programmes, associées à un ensemble de composantes matérielles sur ce terminal. Ainsi, par exemple, l'utilisateur peut commander une lampe connectée pour allumer la lumière ou baisser les volets roulants via son réseau domotique.
Dans certains cas, il est souhaitable d'exécuter un tel service en coopération sur plusieurs équipements terminaux du réseau : selon l'exemple précédent, il est souhaitable d'allumer la lumière puis de baisser les volets lorsque l'utilisateur entre dans une pièce, faisant ainsi coopérer entre eux plusieurs terminaux domestiques : un détecteur de présence, une lampe et des volets roulants. Selon un autre exemple, il peut être souhaitable de visualiser des photographies numériques qui se trouvent à l'extérieur, par exemple dans un cloud, sur un cadre photo du réseau local domotique, lorsque les photographies en question sont mises à disposition par un autre utilisateur.
Or, rendre automatiquement un tel service sur plusieurs terminaux hétérogènes est complexe à mettre en œuvre. Il faut en effet s'assurer que le déroulement des opérations est fait en coopération pour rendre le service correctement selon le comportement souhaité (il ne s'agit pas de baisser les volets avant d'avoir allumé la lumière alors même que l'utilisateur n'est pas encore rentré dans la pièce, ou de tenter de visualiser les photographies alors qu'elles ne sont pas encore disponibles).
Il existe des solutions centralisées pour déployer un tel service sur un terminal donné : par exemple, un boîtier domotique (comme la Homelive © de l'opérateur Orange) peut jouer le rôle d'élément central pour recevoir les informations du réseau local et transmettre les commandes aux terminaux cibles. Selon un autre exemple, la demande de brevet US 2014/118123 A1 décrit une méthode de mise en œuvre d'un service sur plusieurs terminaux d'un réseau local piloté par une passerelle de service, via un serveur externe communicant avec la passerelle. En fonction des terminaux du réseau local, le serveur peut proposer un certain nombre de scénarios prédéterminés, dont toutes les étapes sont contrôlées par la passerelle.
Ces solutions impliquent une dépendance vis-à-vis du fournisseur de service, et supposent un composant supplémentaire (logiciel ou matériel) dans le réseau domotique. Ce composant central doit de surcroît présenter une disponibilité sans faille en termes de fonctionnalités rendues et de connexion au réseau local.
Il existe aussi des solutions basées sur l'utilisation de ressources dans un réseau externe au réseau local (« cloud ») : le service IFTTT (de l'acronyme anglais « IF This Then That »), est un outil d'automatisation de tâches sur le Web, qui met en relation différents « services » couramment utilisés ; il permet de générer une action en fonction d'un élément déclencheur : « si une photo est partagée sur Facebook (« If This »), alors elle est archivée sur Dropbox (« Then That ») ; « si un mouvement est détecté à la maison, alors envoyer un SMS ». Ce type de solutions s'exécute généralement sur un serveur connecté au réseau externe, via une passerelle de services. Il suppose une disponibilité du serveur et de la connexion réseau. Les échanges sont de surcroît limités en termes de débits, temps de réponse, confidentialité des données, etc.
Il existe encore des systèmes distribués pour rendre de tels services. Le document US 2015/046534 A1 décrit par exemple un ensemble de dispositifs configurés pour traiter une ou plusieurs règles, basées sur des données issues de capteurs, pour effectuer une action prédéterminée. Le dispositif peut établir une communication avec un contrôleur pour recevoir une configuration qui comprend une règle. Cette règle peut inclure une description d'une action à effectuer, et peut inclure une condition pour prendre en compte les données des capteurs et indique les critères pour réaliser l'action.
Ces solutions ne permettent pas aujourd'hui de déployer automatiquement un tel service sur un ensemble de terminaux du réseau local sans équipement centralisé et/ou connexion à un réseau externe.
L'invention offre une solution ne présentant pas les inconvénients de l'état de la technique.

L'invention

Selon un aspect fonctionnel, l'invention concerne un procédé de mise en œuvre d'un service dans un réseau local sur un premier terminal et un second terminal aptes à rendre chacun une partie du service.

L'invention est définie par un procédé selon la revendication 1, un système selon la revendication 9, et un programme d'ordinateur selon la revendication 11. Des modes de réalisation supplémentaires sont définis dans les revendications dépendantes.

Avantageusement selon cette approche, un terminal peut, en fonction des sous-règles qu'il est capable d'évaluer, rendre partiellement le service : par exemple, une lampe connectée peut allumer la lumière, l'éteindre ou augmenter son intensité (ce sont des caractéristiques qu'elle est apte à mettre en œuvre) mais ne baisse pas les volets (c'est une sous-règle qui est réservée aux volets roulants électriques connectés).

Par « règle », on entend ici la description d'un comportement des terminaux concernant tout ou partie d'un service (un service pouvant être décrit par une règle ou un ensemble de règles), en tant qu'enchaînement de conditions et d'actions élémentaires, aussi appelées dans la suite expressions, à effectuer sur les terminaux d'un réseau domotique.

Par « sous-règle », on entend ici une partie d'une règle, qui peut être évaluée sur un terminal du réseau. Par « évaluation d'une sous-règle », on entend ici sa mise en œuvre, qui peut correspondre à un calcul relatif à une condition (luminosité inférieure à un seuil, etc.) et/ou à des actions physiques (éteindre la lumière, allumer le chauffage, etc.) ou logicielles (modifier une variable, envoyer un message, etc.)

De surcroît, l'invention permet d'évaluer une sous-règle après que son signal de déclenchement a été diffusé sur le réseau local, notamment par un autre terminal. Ce type de déclenchement peut être associé ou non à un événement local physique : par exemple, il est envisageable d'initier un service si l'un des terminaux du réseau, ou la passerelle domestique, reçoit un message en provenance de son *smartphone.*

Avantageusement, si deux terminaux sont capables d'évaluer une sous-règle, le premier terminal qui reçoit, évalue et met en œuvre la sous-règle fait basculer le signal de déclenchement qu'il a reçu afin qu'un second terminal ayant les mêmes caractéristiques et recevant la sous-règle ne puisse pas l'évaluer. Typiquement une variable booléenne peut être utilisée : la variable positionnée à une certaine valeur sert de déclencheur à la sous-règle ; une fois que la sous-règle est en cours d'évaluation, elle peut être basculée (passer de vrai à faux, ou le contraire) afin d'éviter qu'un autre terminal n'évalue la même sous-règle. Plusieurs terminaux du réseau local peuvent donc être capables ou non d'évaluer la même sous-règle, puisqu'on dispose d'un mécanisme pour gérer les conflits.

Ainsi, l'invention offre l'avantage, à partir d'une règle générale descriptive d'un service, de rendre ledit service de manière répartie sur le réseau domotique. Aucune intelligence centrale n'est requise : chaque terminal peut avoir transmis ses capacités à l'avance, et recevoir ultérieurement la sous-règle qui le concerne, puis attendre le signal de déclenchement qui lui permettra d'évaluer les expressions de la sous-règle. Les différentes sous-règles peuvent par la suite être évaluées de proche en proche. L'invention offre donc l'avantage d'une approche répartie, permettant de s'affranchir de tout équipement central et / ou d'une connexion avec le *cloud* puisque seul le découpage de la règle est effectuée en amont de la mise en œuvre du service. Le découpage de la règle obéit à un mécanisme simple de prise en compte des caractéristiques des terminaux pour l'extraction d'une sous-règle, puis de l'insertion dans cette sous-règle de signaux de déclenchement organisés de manière à ce que le service soit rendu en bonne intelligence par les terminaux coopérants.

L'invention sera mieux comprise à la lecture de la description qui suit, donnée à titre d'exemple et faite en référence aux dessins annexés.

Les figures:

La figure 1 représente le contexte général d'un mode de réalisation de l'invention.

La figure 2 représente schématiquement une architecture d'un terminal implémentant un mode de réalisation de l'évaluation d'une sous-règle selon l'invention.

La figure 3 représente schématiquement une architecture d'un dispositif implémentant un mode de réalisation du découpage d'une règle en sous-règles selon l'invention.

La figure 4 représente sous forme d'organigramme le déploiement d'un service selon un mode de réalisation de l'invention

La figure 5 schématise le déploiement d'un service selon un mode de réalisation de l'invention.

Description détaillée d'un exemple de réalisation illustrant l'invention

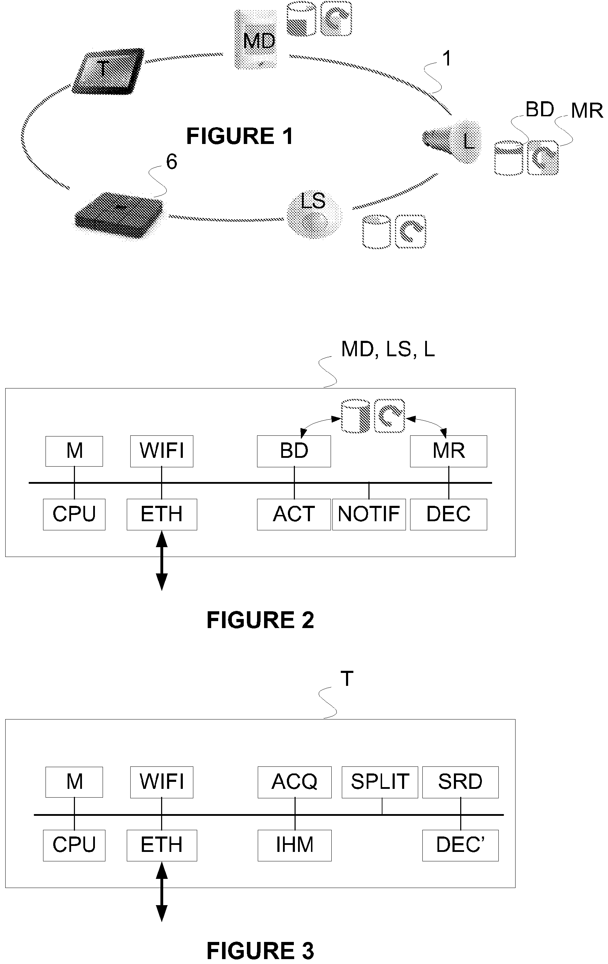

La figure 1 représente le contexte général d'un mode de réalisation de l'invention.

Le réseau domotique (1) est par exemple un réseau local IP (Internet Protocol). Le réseau domotique (1) comporte selon cet exemple un élément de gestion du réseau (6) (une passerelle résidentielle, un hub, etc.) et des équipements terminaux (LS, T, MD, L) connectés sur ce réseau local, aptes à établir des communications entre eux. Il s'agit respectivement d'un capteur de lumière (LS), d'un détecteur de mouvement (MD), d'une lampe (L) et d'une tablette numérique (T). Ces terminaux sont de nature hétérogène. Ils peuvent, par exemple, différer par :

- leur système d'exploitation (Windows, Linux, Android, etc.) ;
- leur type de connexion au réseau (Ethernet, Wifi, Bluetooth, etc.) ;
- les actions dont ils sont capables (mesurer la luminosité, détecter un mouvement, allumer la lampe, etc.)

Par la suite, on entend par équipement terminal, ou plus simplement terminal, tout dispositif apte à se connecter et communiquer sur le réseau domotique.

Dans la suite de la description de ce mode de réalisation particulier de l'invention, on considère le cas d'usage suivant : l'utilisateur souhaite que la lumière s'allume automatiquement lorsqu'il rentre à la maison. Ceci suppose tout d'abord que sa présence soit détecté par le détecteur de mouvement MD, que le seuil de luminosité mesuré subséquemment par le capteur LD soit faible, puis que la lumière L s'allume.

Naturellement, il s'agit seulement d'un cas d'utilisation parmi d'autres. Selon un autre exemple utilisant les mêmes terminaux, en plein jour, si le capteur de luminosité signale un seuil de luminosité important, le module de commande du volet roulant peut décider de le déployer tandis que celui de la lampe coupe l'alimentation de la lampe dont le fonctionnement n'est plus nécessaire.

Selon l'état de la technique connue, il faut effectuer manuellement ces étapes dans l'ordre, ou recourir à un programme centralisé, installé par exemple sur la tablette de l'utilisateur ou sur un terminal spécifique (notamment un boitier domotique) de son réseau local. Dans le cas de l'invention, au contraire, l'utilisateur est non seulement déchargé de ces différentes actions mais aucun équipement supplémentaire n'est requis pour héberger un programme centralisé, la solution de l'invention étant complètement décentralisée.

Une « règle » pour le déploiement du service est instanciée sur les différents terminaux. Le terme de règle, tel qu'utilisé dans la suite de la description, réfère à une succession de règles élémentaires, ou sous-règles, découpées elles-mêmes en événements de type « SI-ALORS » ; une règle est déclenchée par un changement de valeur de variable (déclencheur, ou *trigger*). Selon notre exemple, une règle s'énonce : « si un mouvement est détecté et la luminosité est inférieure à un certain seuil alors allumer la lampe d'entrée », qui peut être symbolisée par la formule :

$$R : SI\ MvtDétecté\ ET\ (Luminosité < 50)\ ALORS\ (allumer\ L)$$

Cette règle peut être découpée en trois sous-règles SR1, SR2 et SR3 qui s'enchaînent l'une à l'autre par l'insertion de conditions de déclenchement :

SR1 : SI MvtDétecté alors valider une première condition

SR2 : SI la première condition est respectée ET (Luminosité < 50) ALORS valider une deuxième condition

SR3 : SI la deuxième condition est valide alors (allumer L)

Plusieurs terminaux sont impliqués par cette règle, et agissent en conséquence, selon ce mode de réalisation de l'invention :

- L'utilisateur saisit et définit la règle complète R représentative du service, dans cette exemple sur la tablette T, par exemple via un tableau de bord ou une application de contrôle ;

- Un procédé selon l'invention, installé dans cet exemple sur la tablette,

  ◦ découpe automatiquement la règle en sous-règles ;
  ◦ puis distribue les sous-règles aux équipements concernés ;

- Le détecteur de mouvement (MD) reçoit, mémorise et évalue la sous-règle SR1 ; si le mouvement est détecté, il diffuse cette information sur le réseau local ;

- Le capteur de luminosité (LD) détecte l'information selon laquelle le mouvement est détecté, évalue la sous-règle (SR2), mesure la luminosité et diffuse le résultat sur le réseau local si la luminosité est inférieure à 50 (LUX) ;

- Le module de commande de la lampe (L) détecte l'information selon laquelle la luminosité est inférieure à 50, évalue la sous-règle SR3 et commande l'éclairage ; la lampe L s'allume.

L'entité qui découpe la règle en sous-règles doit pouvoir être capable de se procurer les capacités des terminaux afin de pouvoir identifier correctement lesquels sont aptes à évaluer une sous-règle donnée. Selon ce mode de réalisation, le terminal lui-même transmet ses caractéristiques, mais des variantes peuvent être envisagées (caractéristiques obtenues à partir du Cloud, d'un équipement central, etc.) Chaque terminal doit être aussi capable d'évaluer une (sous-)règle. Les différentes étapes ne pouvant pas être enchaînées n'importe comment (il n'est pas nécessaire d'allumer la lampe si aucun mouvement n'a été détecté, puisqu'il n'y a vraisemblablement pas de présence dans la pièce), chaque terminal doit notamment être capable, une fois la sous-règle acquise, de prendre l'action correspondante (allumer la lumière, mesurer le mouvement, etc.) et d'en informer les autres terminaux par validation d'une condition et diffusion d'un message approprié sur le réseau local. C'est ce qu'on entend par « évaluation d'une sous-règle ».

De manière générale, chaque terminal selon ce mode de réalisation de l'invention doit donc être équipé d'un moyen pour stocker les règles, typiquement une base de données (BD), d'un moyen pour diffuser ses capacités sur le réseau local, par exemple lors de sa première connexion, et d'un module logiciel ou matériel, que l'on appellera « moteur de règles » (MR) capable d'évaluer une (sous-)règle en prenant la ou les actions adéquates pour sa mise en œuvre.

On notera en outre que chaque terminal peut jouer le rôle de la tablette, c'est-à-dire comporter le module qui découpe la règle (en sous-règles).

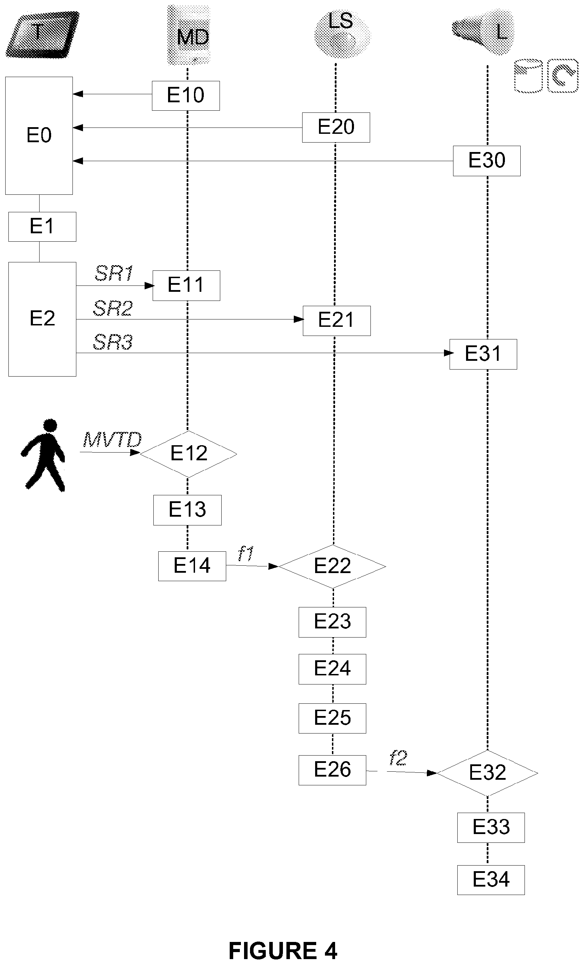

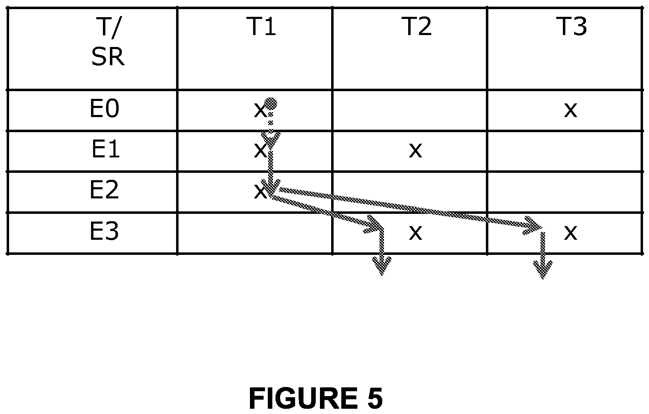

Une version algorithmique plus complète sera détaillée plus tard à l'appui des figures 4 et 5.

On notera que cette mise en œuvre offre une solution de synchronisation et de mise en œuvre du service complètement décentralisée, basée sur une diffusion, par exemple de type multicast, de messages dans le réseau local domotique.

L'invention offre ainsi une solution souple, puissante et simple à mettre en œuvre dans le réseau local.

La figure 2 représente schématiquement une architecture d'un terminal connecté implémentant un mode de réalisation de l'invention, comme par exemple la lampe (L) de la figure 1.

Le terminal comprend, classiquement, des mémoires (M) associées à un processeur (CPU). Les mémoires peuvent être de type ROM (de l'anglais Read Only Memory) ou RAM (de l'anglais *Random Access Memory*) ou encore Flash. Il communique avec le réseau local via le module Ethernet (ETH) d'une part et éventuellement le module WIFI pour une communication sans fil. Le terminal comprend en outre, conformément à l'invention, plusieurs modules matériels et/ou logiciels, lui permettant de transmettre ses capacités sur le réseau local, stocker les règles et/ou sous-règles, les évaluer, les mettre en oeuvre et diffuser les résultats de leur évaluation sur le réseau local. Par exemple sur la figure 2, cette fonction est rendue par les modules suivants :

- un module logiciel DEC apte à diffuser, lors d'une étape dite de découverte, les capacités matérielles et/ou logicielles du terminal sur le réseau local en utilisant l'un des modules de communication à sa disposition : soit le module WiFI, soit le module ETH, etc.

- un module BD de base de données, qui sert notamment à stocker les règles (R) et sous-règles (SR). On notera que cette base peut faire partie de la mémoire M, ou alternativement être rattachée à un disque local ou tout autre support de données ;

- un module logiciel MR apte à évaluer une règle/sous-règle et prendre un certain nombre d'actions en conséquence ;

- un module logiciel NOTIF apte à diffuser des messages sur le réseau local en utilisant l'un des modules de communication à sa disposition : soit le module WiFI pour une communication de messages WiFI, soit le module ETH, etc.

- un module logiciel ACT apte à commander une action physique ou logicielle sur le terminal (allumer la lumière, mesurer le mouvement, etc.)

On notera que ces derniers modules sont logiciels et ne requièrent donc pas d'adaptation matérielle du terminal du réseau local.

La figure 3 représente schématiquement une architecture d'un dispositif implémentant un mode de réalisation du découpage d'une règle en sous-règles selon l'invention. ce dispositif peut être distinct du terminal de la figure 2 ou en faire partie.

Il comprend également, classiquement, des mémoires (M) associées à un processeur (CPU). Les mémoires peuvent être de type ROM (de l'anglais Read Only Memory) ou RAM (de l'anglais *Random Access Memory*) ou encore Flash. Il communique avec le réseau local via le module Ethernet (ETH) d'une part et éventuellement le module WIFI pour une communication sans fil. Le dispositif comprend en outre, conformément à l'invention, plusieurs modules matériels et/ou logiciels, lui permettant de mettre en œuvre les différentes fonctions relatives au découpage et à la distribution de règles sur les différents terminaux du réseau domotique.

- un module d'interface utilisateur (IHM pour Interface Homme Machine) permettant d'acquérir notamment une règle descriptive d'un service ; par interface utilisateur, on entend l'ensemble des informations et mécanismes matériels et logiciels permettant à un utilisateur de communiquer avec le dispositif. Il peut s'agir, indifféremment d'un clavier, d'une interface graphique (pour laquelle les objets à manipuler sont présentés sous forme de pictogrammes sur lesquels l'usager peut imiter des manipulations physiques), d'une interface de type Web (une interface graphique d'une application Web, se manipulant à l'aide d'un navigateur Web), ou encore d'une interface vocale, etc. Ce module d'interface utilisateur devient optionnel dans un contexte ou la règle peut être obtenue via un autre moyen, notamment le réseau (WIFI, ETH).

- un module logiciel DEC' apte à recevoir, et éventuellement requérir, lors d'une étape dite de découverte, les capacités matérielles et/ou logicielles des terminaux du réseau local en utilisant l'un des modules de communication à sa disposition : soit le module WiFI, soit le module ETH, etc.

- un module ACQ permettant d'acquérir la description des capacités des terminaux.

- un module logiciel SPLIT de découpe de la règle en sous-règles (SR). Ce module permet notamment, comme il sera décrit par la suite, de découper la règle initiale en sous-règles qui pourront être évaluées localement sur un ou plusieurs terminaux compte tenu de leurs capacités, puis d'adjoindre à ces sous-règles un mécanisme d'enchaînement de l'évaluation de celles-ci.

- un module logiciel SRD apte à diffuser les sous-règles sur le réseau local en utilisant l'un des modules de communication à sa disposition. On notera que ce module peut transmettre les sous-règles en unicast (directement au terminal concerné) ou en multicast (par diffusion sur le réseau local) sans perte de généralité.

On notera que ces derniers modules sont logiciels et ne requièrent donc pas d'adaptation matérielle du dispositif du réseau local.

On notera aussi que n'importe lequel des terminaux du réseau local peut remplir ce rôle, moyennant une simple mise à jour logicielle.

La figure 4 schématise le déploiement d'un service selon un mode de réalisation de l'invention.

On repart du contexte de la figure précédente, à savoir : l'utilisateur du réseau souhaite que la lumière s'allume lorsqu'il rentre à la maison à la tombée de la nuit. Ceci suppose tout d'abord que sa présence soit détectée par le détecteur de mouvement (MD), que le seuil de luminosité (LUM) mesuré subséquemment par le capteur de luminosité (LS) soit faible, puis que la lampe (L) s'allume.

La mise en œuvre de l'invention se déroule en trois phases successives :

• une première phase de découverte dans laquelle les terminaux s'identifient et donnent leurs capacités ;

• une seconde phase de génération des sous-règles à partir de la règle, qui consiste plus particulièrement à enchaîner les actions suivantes :

- découpage de la règle en sous-règles qui pourront être évaluées localement sur un ou plusieurs terminaux compte tenu de leurs capacités ;
- adjonction à ces sous-règles d'un mécanisme d'enchaînement de l'évaluation de celles-ci ;
- distribution des sous-règles aux différents terminaux concernés (capables d'évaluer les sous-règles en question).

• une troisième phase de mise en œuvre du service sur les différents équipements.

Lors d'une première phase, dite de « découverte », les terminaux (MD, LS, L) du réseau déclarent leurs capacités au cours des étapes respectives E10, E20, E30 respectives. Cette phase peut être initiée par une requête d'un terminal du réseau, de préférence mais non obligatoirement celui qui sera chargé ultérieurement de découper la règle et de distribuer les sous-règles, par exemple la tablette numérique. Selon une alternative, chacun des terminaux déclare spontanément ses capacités, par exemple lors de sa première connexion au réseau domotique, ou à la première mise sous tension, lorsque les différents terminaux ne se connaissent pas encore.

Ainsi, dans le cas du capteur de mouvement, il peut transmettre par exemple certaines ou l'ensemble des informations suivantes :

- son identifiant,
- son type (capteur de mouvement, de soleil, de vent, etc.)
- le nom et l'unité du paramètre physique mesurée,
- les valeurs minimales et maximales mesurées,
- etc.

La transmission des capacités peut se faire par exemple sous la forme d'une structure de données (fichier, etc.), diffusé sur le réseau au cours de cette étape de découverte. La transmission du fichier de données peut être réalisée en une fois ou en plusieurs.

Le terminal T reçoit et enregistre ces informations au cours d'une étape E0 initiale.

A l'issue de cette phase, les capacités des terminaux sont connues des autres terminaux du réseau. Selon un mode de réalisation possible, tous les terminaux connaissent les caractéristiques des autres terminaux. Selon une variante, seuls les terminaux qui sont aptes à découper la règle connaissent les états des autres terminaux.

Une seconde phase de ce mode de réalisation correspond à l'acquisition et au découpage de la règle (R) de mise en œuvre du service en sous-règles (SRi) et à la distribution de ces sous-règles aux différents terminaux. On notera que cette phase est temporellement dé-corrélée de la première (peu importe à quel moment un terminal a déclaré ses capacités, du moment qu'elles sont connues au moment du découpage de la règle par le module chargé du découpage).

Lors d'une étape E1, l'utilisateur saisit, par exemple en utilisant la tablette T, la règle générale R. Selon notre exemple de la figure 1, la règle à découper, analyser et mettre en œuvre pour rendre le service S souhaité par l'utilisateur est la suivante :

$$R = \textit{SI MvtDétecté ET (Luminosité < 50) ALORS (allumer L)}$$

La règle est tout d'abord découpée en sous règles (SR) et chaque sous-règle (SR) est distribuée uniquement, lors d'une étape **E2,** aux terminaux susceptibles de l'évaluer (la mettre en œuvre). Par distribution, on entend ici tout mode de transmission (en point à point ou en diffusion sur le réseau) de la sous-règle au terminal ciblé. On notera que cette approche nécessite une opération « centralisée » (sur la tablette ou sur la boîte domotique, par exemple) pour décider de l'attribution des sous-règles. Ceci ne nuit en rien au caractère non centralisé de l'invention car cette opération de découpage peut être effectué sur n'importe quel terminal du réseau domotique.

Le découpage de la règle obéit aux principes directeurs suivants :

- un terminal est capable d'évaluer/mettre en œuvre une ou plusieurs sous-règles grâce à son moteur MR ;
- un terminal est capable de stocker une sous-règle, temporairement ou non, dans sa base de données (BD).
- chaque sous-règle est déclenchée par un événement, appelé par la suite le « déclencheur » ou « trigger ». On verra que ce déclencheur peut être de deux types : changement de conditions locales (le mouvement, la lumière, la température, etc., ont changé dans la pièce, ou même à l'extérieur) ou « trigger » logiciel reçu par le biais du réseau local.
- chaque sous-règle est évaluée, ou mise en œuvre, par le « moteur de règles » (MR) du terminal, capable, en association avec la base de données, d'évaluer la règle et prendre la ou les actions adéquates.
- l'évaluation de chaque sous-règle entraîne au moins une action, qui peut-être soit une action locale (pour influencer par une commande appropriée, la lumière, la température, etc.), soit la diffusion d'un nouvel événement sur le réseau local après changement de conditions, notamment une condition d'enchaînement de sous-règles.

De manière générale, on peut utiliser pour représenter une règle R une formalisation du type :
R= E1(x11, x12, ...) AND E2(x21, x22, ...) AND E3(x31, x32, ...) ... TRIGGERS: x01, x02, ... avec :

- Ei : expression numéro i correspondant à, une condition ou une action ;
- xij : variables (éventuelles) des expressions et triggers, le premier indice (i) correspondant au numéro de l'expression et le deuxième à l'ordre de la variable dans la liste des variables pour cette expression.

Dans notre exemple, on a la règle schématique suivante :
R= MVTD && LUM<50 && LON() ; TRIGGERS = MVTD;
Le découpage de cette règle pour les différents terminaux donne les trois sous-règles suivantes :

SR1 : MVTD && (fl=true) ; TRIGGERS = MVTD
SR2 : (f1==true) && (f1=false) && (LUM<50) && (f2=true); TRIGGERS = f1.
SR3 : (f2==true) && (f2= false) && LON ( ) ; TRIGGERS = f2

Selon cette notation, un déclencheur (TRIGGERS) diffusé sur le réseau est, à l'exception du déclencheur initial (MVTD) qui correspond pour sa part à un changement local physique (mouvement détecté), de la forme « fi=true » ce qui signifie que la variable fi (trigger numéro i) est positionnée à la valeur « vraie ». Il peut s'agir par exemple d'une variable booléenne prenant la valeur 0 (faux, false) ou 1 (true, vrai).
Cette variable booléenne est, selon les exemples ci-dessus, remise à zéro (« false ») après son évaluation, ce qui permet d'invalider la condition de la sous-règle déclenchée par ce déclencheur et donc d'empêcher la répétition de son évaluation. Par exemple, la sous-règle 2 n'est évaluée que si la variable f1 est à true (f1==true). Le terminal qui évalue cette sous-règle fait basculer cette variable après en avoir pris connaissance (f1=false) de manière à ce qu'elle ne soit plus évaluée.
On notera que cette remise à zéro est optionnelle. Par exemple, si deux lampes sont reliées au réseau local, elles peuvent toutes deux s'allumer et dans ce cas il est préférable qu'aucune d'entre elles, ou au moins l'une d'entre elles, ne remette pas la variable à zéro.
Selon une variante, un timer peut être transmis avec le signal de déclenchement : par exemple, si deux lampes sont reliées au réseau local, l'une d'entre elle doit respecter un certain temps avant d'évaluer son déclencheur, ce qui laisse le temps à la première de s'allumer.
Selon un autre mode de réalisation, la règle globale peut être diffusée dans le réseau local, et découpée sur chacun des terminaux.
Selon encore un autre mode de réalisation, la règle globale peut être découpée à l'extérieur (dans le cloud).
Une troisième phase correspond à la mise en œuvre du service sur les différents terminaux concernés du réseau.
Lors des étapes E12, E22, E32 respectives, chacun des terminaux qui a obtenu au préalable une sous-règle se met en attente sur un signal de déclenchement, soit local, soit diffusé sur le réseau, respectivement : le capteur de mouvement MD sur l'événement local « mouvement détecté » (MVTD), le capteur de luminosité LS sur le trigger logiciel « f1 » diffusé sur le réseau local et la lampe L sur le trigger logiciel « f2 » diffusé sur le réseau local.
Lorsqu'un mouvement local est détecté par le capteur MD, l'étape E12 est franchie et le détecteur de mouvement MD enchaîne alors, conformément à la sous-règle qu'il a obtenue (SR1), les étapes E13 de mise à « true » de la variable f1 (f1 = true) et E14 de diffusion de la variable f1 modifiée sur le réseau local.
Lorsque l'événement « f1 » (f1==true) est détecté par le capteur de luminosité LS, l'étape E22 est franchie et le capteur de luminosité enchaîne alors, conformément à la sous-règle qu'il a obtenue, les étapes E23 de mise à « false » de la variable f1, E24 de test de la luminosité, E25 de mise à « true » de la variable f2 si le test de luminosité est correct, c'est-à-dire dans notre exemple si la luminosité est inférieure à 50 LUX, et E26 de diffusion de la variable f2 modifiée sur le réseau local.
Lorsque l'événement « f2 » est détecté par la lampe L, l'étape E32 est franchie et la lampe enchaîne alors, conformément à la sous-règle SR3 qu'il a obtenue, les étapes E33 de mise à « false » de la variable f2 et E34 d'allumage de la lampe. Selon une variante, si la variable f2 n'est pas remise à « false », une autre lampe pourrait s'allumer.
La figure 5 représente sous forme de tableau les règles de déploiement d'un service selon un mode de réalisation de l'invention dans lequel un terminal donné peut évaluer plusieurs sous-règles (SRi), ou expressions (Ex), et où inversement, une expression ou sous-règle peut être évaluée par plusieurs terminaux. On rappelle qu'une règle est découpée en sous-règles, chaque sous-règle étant évaluable par un ou plusieurs terminaux, et que la sous-règle peut elle-même être considérée comme un ensemble d'expressions élémentaires déclenchées par un trigger.
Le tableau de la figure 4 illustre la situation suivante : trois terminaux T1, T2 et T3 coopèrent pour rendre un service S auquel est associée une règle R composée de trois sous-règles, ou expressions, notées respectivement E1, E2 et E3.

- Le terminal T1 peut émettre le trigger d'origine (E0, trigger initial) et évaluer les sous-règles E1 et E2
- Le terminal T2 peut évaluer E1 et E3
- Le terminal T3 peut évaluer E0 et E3

Pour une règle de type : « R= E1 AND E2 AND E3 », on voit qu'il est possible de retenir deux chemins dans le tableau (parmi les quatre chemins possibles), chacun d'entre eux correspondant à une manière de rendre le service par les terminaux du réseau, à savoir :

1. T1, T1, T2 : le terminal T1 met en œuvre E1, E2 et le terminal T2 met en œuvre E3
2. T1, T1, T3 : le terminal T1 met en œuvre E1, E2 et le terminal T3 met en œuvre E3

On comprend qu'on peut dans un tel cas définir avantageusement les 3 sous-règles :

- SR1: E1 AND E2 AND (t1 = true), mise en œuvre sur T1
- SR2: t1 AND (t1 = false) AND E3, mise en œuvre sur T2
- SR3: tempo(1) AND t1 AND (t1 = false) AND E3, mise en œuvre sur T3

Le trigger t1 est utilisé pour déclencher l'évaluation de E3 sur T2 ou T3. La temporisation de SR3 permet cependant d'évaluer cette sous-règle seulement dans le cas où SR2 n'a pas été utilisée, après un certain temps correspondant à la valeur du timer (par exemple, 5 secondes) ; c'est donc ce mécanisme qui permet que T3 ne soit exécutée qu'une seule fois si cela est souhaitable (il n'est peut-être pas nécessaire d'allumer deux lampes).

En variante, on pourrait imaginer que le service soit rendu par les deux terminaux T2 et T3 (qui correspondent par exemple à deux lampes distinctes) auquel cas on pourrait prévoir les règles suivantes :

- SR1: E1 AND E2 AND (t1 = true), mise en œuvre sur T1
- SR2: t1 AND E3, mise en œuvre sur T2
- SR3: t1 AND E3, mise en œuvre sur T3

Il va de soi que le mode de réalisation qui a été décrit ci-dessus a été donné à titre purement indicatif et nullement limitatif.

Notamment, l'invention a été plus particulièrement décrite dans le cas où le premier terminal est un capteur et le deuxième un terminal capable d'une action et d'une commande (mesurer la luminosité, faire basculer et transmettre un flag). L'inverse est naturellement envisageable : le premier terminal n'est pas nécessairement un capteur.

- l'évaluation de chaque sous-règle entraîne au moins une action, qui peut-être soit une action locale (pour influencer par une commande appropriée, la lumière, la température, etc.), soit la diffusion d'un nouvel événement sur le réseau local après changement de conditions, notamment une condition d'enchaînement de sous-règles.

De manière générale, on peut utiliser pour représenter une règle R une formalisation du type :
R= E1(x11, x12, ...) AND E2(x21, x22, ...) AND E3(x31, x32, ...) ... TRIGGERS: x01, x02, ...
avec :

○ Ei : expression numéro i correspondant à, une condition ou une action ;

○ xij : variables (éventuelles) des expressions et triggers, le premier indice (i) correspondant au numéro de l'expression et le deuxième à l'ordre de la variable dans la liste des variables pour cette expression.

Dans notre exemple, on a la règle schématique suivante :
R= MVTD && LUM< 50 && LON() ; TRI GGERS = MVTD;
Le découpage de cette règle pour les différents terminaux donne les trois sous-règles suivantes :

SR1 : MVTD && (f1 = true) ; TRIGGERS = MVTD
SR2 : (f1==true) && (f1 = false) && (LUM<50) && (f2=true); TRIGGERS = f1.
SR3 : (f2= = true) && (f2= false) && LON ( ) ; TRI GGERS = f2

Selon cette notation, un déclencheur (TRIGGERS) diffusé sur le réseau est, à l'exception du déclencheur initial (MVTD) qui correspond pour sa part à un changement local physique (mouvement détecté), de la forme « fi= true » ce qui signifie que la variable fi (trigger numéro i) est positionnée à la valeur « vraie ». Il peut s'agir par exemple d'une variable booléenne prenant la valeur 0 (faux, false) ou 1 (true, vrai).

Cette variable booléenne est, selon les exemples ci-dessus, remise à zéro (« false ») après son évaluation, ce qui permet d'invalider la condition de la sous-règle déclenchée par ce déclencheur et donc d'empêcher la répétition de son évaluation. Par exemple, la sous-règle 2 n'est évaluée que si la variable f1 est à true (f1==true). Le terminal qui évalue cette sous-règle fait basculer cette variable après en avoir pris connaissance (f1=faise) de manière à ce qu'elle ne soit plus évaluée.

On notera que cette remise à zéro est optionnelle. Par exemple, si deux lampes sont reliées au réseau local, elles peuvent toutes deux s'allumer et dans ce cas il est préférable qu'aucune d'entre elles, ou au moins l'une d'entre elles, ne remette pas la variable à zéro.

Selon une variante, un timer peut être transmis avec le signal de déclenchement : par exemple, si deux lampes sont reliées au réseau local, l'une d'entre elle doit respecter un certain temps avant d'évaluer son déclencheur, ce qui laisse le temps à la première de s'allumer.

Selon un autre mode de réalisation, la règle globale peut être diffusée dans le réseau local, et découpée sur chacun des terminaux.

Selon encore un autre mode de réalisation, la règle globale peut être découpée à l'extérieur (dans le cloud).

Une troisième phase correspond à la mise en œuvre du service sur les différents terminaux concernés du réseau.

Lors des étapes E12, E22, E32 respectives, chacun des terminaux qui a obtenu au préalable une sous-règle se met en attente sur un signal de déclenchement, soit local, soit diffusé sur le réseau, respectivement : le capteur de mouvement MD sur l'événement local « mouvement détecté » (MVTD), le capteur de luminosité LS sur le trigger logiciel « f1 » diffusé sur le réseau local et la lampe L sur le trigger logiciel « f2 » diffusé sur le réseau local.

Lorsqu'un mouvement local est détecté par le capteur MD, l'étape E12 est franchie et le détecteur de mouvement MD enchaîne alors, conformément à la sous-règle qu'il a obtenue (SR1), les étapes E13 de mise à « true » de la variable f1 (f1 = true) et E14 de diffusion de la variable f1 modifiée sur le réseau local.

Lorsque l'événement « f1 » (f1==true) est détecté par le capteur de luminosité LS, l'étape E22 est franchie et le capteur de luminosité enchaîne alors, conformément à la sous-règle qu'il a obtenue, les étapes E23 de mise à « false » de la variable f1, E24 de test de la luminosité, E25 de mise à « true » de la variable f2 si le test de luminosité est correct, c'est-à-dire dans notre exemple si la luminosité est inférieure à 50 LUX, et E26 de diffusion de la variable f2 modifiée sur le réseau local.

Lorsque l'événement « f2 » est détecté par la lampe L, l'étape E32 est franchie et la lampe enchaîne alors, conformément à la sous-règle SR3 qu'il a obtenue, les étapes E33 de mise à « false » de la variable f2 et E34 d'allumage de la lampe. Selon une variante, si la variable f2 n'est pas remise à « false », une autre lampe pourrait s'allumer.

La figure 5 représente sous forme de tableau les règles de déploiement d'un service selon un mode de réalisation de l'invention dans lequel un terminal donné peut évaluer plusieurs sous-règles (SRi), ou expressions (Ex), et où inversement, une expression ou sous-règle peut être évaluée par plusieurs terminaux. On rappelle qu'une règle est découpée en sous-règles, chaque sous-règle étant évaluable par un ou plusieurs terminaux, et que la sous-règle peut elle-même être considérée comme un ensemble d'expressions élémentaires déclenchées par un trigger.

Le tableau de la figure 4 illustre la situation suivante : trois terminaux T1, T2 et T3 coopèrent pour rendre un service S auquel est associée une règle R composée de trois sous-règles, ou expressions, notées respectivement E1, E2 et E3.

- Le terminal T1 peut émettre le trigger d'origine (E0, trigger initial) et évaluer les sous-règles E1 et E2
- Le terminal T2 peut évaluer E1 et E3
- Le terminal T3 peut évaluer E0 et E3

Pour une règle de type : « R= E1 AND E2 AND E3 », on voit qu'il est possible de retenir deux chemins dans le tableau (parmi les quatre chemins possibles), chacun d'entre eux correspondant à une manière de rendre le service par les terminaux du réseau, à savoir :

1. T1, T1, T2 : le terminal T1 met en œuvre E1, E2 et le terminal T2 met en œuvre E3
2. T1, T1, T3 : le terminal T1 met en œuvre E1, E2 et le terminal T3 met en œuvre E3

On comprend qu'on peut dans un tel cas définir avantageusement les 3 sous-règles :

- SR1: E1 AND E2 AND (t1 = true), mise en œuvre sur T1
- SR2: t1 AND (t1 = false) AND E3, mise en œuvre sur T2
- SR3: tempo(1) AND t1 AND (t1 = false) AND E3, mise en œuvre sur T3

Le trigger t1 est utilisé pour déclencher l'évaluation de E3 sur T2 ou T3. La temporisation de SR3 permet cependant d'évaluer cette sous-règle seulement dans le cas où SR2 n'a pas été utilisée, après un certain temps correspondant à la valeur du timer (par exemple, 5 secondes) ; c'est donc ce mécanisme qui permet que T3 ne soit exécutée qu'une seule fois si cela est souhaitable (il n'est peut-être pas nécessaire d'allumer deux lampes).

En variante, on pourrait imaginer que le service soit rendu par les deux terminaux T2 et T3 (qui correspondent par exemple à deux lampes distinctes) auquel cas on pourrait prévoir les règles suivantes :

- SR1: E1 AND E2 AND (t1 = true), mise en œuvre sur T1
- SR2: t1 AND E3, mise en œuvre sur T2

- SR3: t1 AND E3, mise en œuvre sur T3

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Notamment, l'invention a été plus particulièrement décrite dans le cas où le premier terminal est un capteur et le deuxième un terminal capable d'une action et d'une commande (mesurer la luminosité, faire basculer et transmettre un flag). L'inverse est naturellement envisageable : le premier terminal n'est pas nécessairement un capteur.

**Revendications**

1. Procédé de mise en œuvre d'un service (S) dans un réseau local (1) sur un premier terminal (MD, LS, L) et un second terminal aptes à rendre chacun une partie du service, ledit service étant décrit par au moins une règle (R) comportant au moins une première sous-règle et une seconde sous-règle, ledit procédé comportant les étapes suivantes :

   - obtention (E11, E21, E31), par le premier terminal, de la première sous-règle (SR1, SR2, SR3), la première sous-règle comprenant au moins un premier déclencheur (MVTD, f1, f2) et une expression (Ei) à évaluer, le premier déclencheur déclenchant l'évaluation de la première sous-règle lorsqu'une variable est positionnée à une première valeur, l'expression comportant au moins une action, l'évaluation de la première sous-règle comportant le basculement de la variable vers une seconde valeur ;
   - obtention (E11, E21, E31), par le second terminal, de la seconde sous-règle (SR1, SR2, SR3), la seconde sous-règle comportant au moins un second déclencheur (MVTD, f1, f2) et l'expression (Ei) à évaluer, le second déclencheur déclenchant l'évaluation de la seconde sous-règle lorsque la variable est positionnée à la première valeur, l'évaluation de la seconde sous-règle comportant le basculement de la variable vers la seconde valeur ;
   - réception (E12, E22, E32), par le premier terminal, d'un signal de déclenchement du déclencheur diffusé sur le réseau local, ledit signal de déclenchement étant un premier message (f1, f2) dans lequel la variable est positionnée à la première valeur ;
   - évaluation (E13-E14, E23-E26, E33-E34), par le premier terminal, de ladite première sous-règle (SR1, SR2, SR3) et désactivation, par le premier terminal, du signal de déclenchement en diffusant sur le réseau local (1) un second message dans lequel la variable est positionnée à la seconde valeur.
   - réception, par le second terminal, du second message comportant la variable positionnée à la seconde valeur, ladite réception empêchant l'évaluation de la seconde sous-règle par le second terminal.

2. Procédé de mise en œuvre d'un service (S) selon la revendication 1, ledit procédé comportant en outre, préalablement à la réception de la première sous-règle, une étape de transmission (E10, E20, E30) des capacités du premier terminal, la première sous-règle étant liée auxdites capacités du premier terminal, et ledit procédé comportant en outre, préalablement à la réception de la seconde sous-règle, une étape de transmission (E10, E20, E30) des capacités du second terminal, la seconde sous-règle étant liée auxdites capacités du second terminal.

3. Procédé de mise en œuvre d'un service (S) selon la revendication 1, selon lequel la règle (R) comporte en outre une troisième sous-règle dont le signal de déclenchement est un événement physique local (MVTD).

4. Procédé de mise en œuvre d'un service (S) selon la revendication 1, selon lequel la variable est une variable booléenne, la première valeur est "un" ou "vrai", et la seconde valeur est "zéro" ou "faux".

5. Procédé de mise en œuvre d'un service (S) selon la revendication 1, comportant en outre une étape pour l'enchaînement de deux sous-règles lors de l'évaluation d'une expression (Ei).

6. Procédé de mise en œuvre d'un service (S) selon la revendication 1, comportant en outre une étape de génération (E14, E26) d'un second signal de déclenchement (« *f2=true* ») lors de l'évaluation d'une expression (Ei).

7. Procédé de mise en œuvre d'un service (S) selon la revendication 1, comportant en outre une étape de mise en œuvre, par le second terminal d'une temporisation lors de l'évaluation d'une expression (Ei) de la seconde sous-règle.

8. Procédé de mise en œuvre d'un service (S) selon la revendication 1, comportant en outre les étapes suivantes effectuées par un dispositif (T) :

- découverte (E0) des capacités du premier terminal et des capacités du second terminal (MD, LS, L) ;
- acquisition (E1) de la règle (R) décrivant le service (S) ;
- génération (E2) de la première sous-règle et de la seconde sous-règle à partir de la règle (R), la première sous-règle et la seconde sous-règle correspondant respectivement aux capacités du premier terminal et aux capacités du second terminal (MD, LS, L) ;
- transmission de la première sous-règle et de la seconde sous-règle (SR1, SR2, SR3) respectivement au premier terminal et au second terminal.

9. Système pour la mise en œuvre d'un service (S) dans un réseau local (1), ledit système comportant un premier terminal et un second terminal adaptés pour mettre en œuvre le procédé selon la revendication 1.

10. Système pour la mise en œuvre d'un service (S) selon la revendication 9, comportant en outre un dispositif (T) adapté pour mettre en œuvre le procédé selon la revendication 8.

11. Programme d'ordinateur comportant des instructions de code qui, lorsqu'elles sont exécutées par un ordinateur, conduisent celui-ci à mettre en œuvre le procédé selon la revendication 1.

12. Programme d'ordinateur selon la revendication 11, comportant en outre des instructions qui, lorsqu'elles sont exécutées par l'ordinateur, conduisent celui-ci à mettre en œuvre le procédé selon la revendication 8.

**Patentansprüche**

1. Verfahren zur Umsetzung eines Dienstes (S) in einem lokalen Netzwerk (1) auf einem ersten Endgerät (MD, LS, L) und einem zweiten Endgerät, die geeignet sind, jeweils einen Teil des Dienstes zu erbringen, wobei der Dienst durch mindestens eine Regel (R) beschrieben ist, die mindestens eine erste Unterregel und eine zweite Unterregel aufweist, wobei das Verfahren die folgenden Schritte aufweist:

- Beziehen (E11, E21, E31), durch das erste Endgerät, der ersten Unterregel (SR1, SR2, SR3), wobei die erste Unterregel mindestens einen ersten Auslöser (MVTD, f1, f2) und einen zu bewertenden Ausdruck (Ei) umfasst, wobei der erste Auslöser das Bewerten der ersten Unterregel auslöst, wenn eine Variable an einem ersten Wert positioniert ist, wobei der Ausdruck mindestens eine Aktion aufweist, wobei das Bewerten der ersten Unterregel das Umschalten der Variablen zu einem zweiten Wert aufweist;
- Beziehen (E11, E21, E31), durch das zweite Endgerät, der zweiten Unterregel (SR1, SR2, SR3), wobei die zweite Unterregel mindestens einen zweiten Auslöser (MVTD, f1, f2) und den zu bewertenden Ausdruck (Ei) umfasst, wobei der zweite Auslöser das Bewerten der zweiten Unterregel auslöst, wenn die Variable am ersten Wert positioniert ist, wobei das Bewerten der zweiten Unterregel das Umschalten der Variablen zum zweiten Wert aufweist;
- Empfangen (E12, E22, E32), durch das erste Endgerät, eines Auslösesignals des Auslösers, das über das lokale Netzwerk verbreitet wird, wobei das Auslösesignal eine erste Nachricht (f1, f2) ist, in welcher die Variable am ersten Wert positioniert ist;
- Bewerten (E13-E14, E23-E26, E33-E34), durch das erste Endgerät, der ersten Unterregel (SR1, SR2, SR3) und Deaktivieren, durch das erste Endgerät, des Auslösesignals durch Verbreitung, über das lokale Netzwerk (1), einer zweiten Nachricht, in welcher die Variable am zweiten Wert positioniert ist.
- Empfangen, durch das zweite Endgerät, der zweiten Nachricht, die die Variable aufweist, die am zweiten Wert positioniert ist, wobei das Empfangen das Bewerten der zweiten Unterregel durch das zweite Endgerät verhindert.

2. Verfahren zur Umsetzung eines Dienstes (S) nach Anspruch 1, wobei das Verfahren ferner vor dem Empfang der ersten Unterregel einen Schritt des Übertragens (E10, E20, E30) der Kapazitäten des ersten Endgeräts aufweist, wobei die erste Unterregel mit den Kapazitäten des ersten Endgeräts verbunden ist, und das Verfahren ferner vor dem Beziehen der zweiten Unterregel einen Schritt des Übertragens (E10, E20, E30) der Kapazitäten des zweiten Endgeräts aufweist, wobei die zweite Unterregel mit den Kapazitäten des zweiten Endgeräts verbunden ist.

3. Verfahren zur Umsetzung eines Dienstes (S) nach Anspruch 1, wobei die Regel (R) ferner eine dritte Unterregel aufweist, deren Auslösesignal eine lokales physisches Ereignis (MVTD) ist.

4. Verfahren zur Umsetzung eines Dienstes (S) nach Anspruch 1, wobei die Variable eine boolesche Variable ist, der erste Wert "eins" oder "wahr" und der zweite Wert "null" oder "falsch" ist.

5. Verfahren zur Umsetzung eines Dienstes (S) nach Anspruch 1, ferner aufweisend einen Schritt zur Verkettung zweier Unterregeln beim Bewerten eines Ausdrucks (Ei).

6. Verfahren zur Umsetzung eines Dienstes (S) nach Anspruch 1, ferner aufweisend einen Schritt des Erzeugens (E14, E26) eines zweiten Auslösesignals ("*f2=true*") beim Bewerten eines Ausdrucks (Ei).

7. Verfahren zur Umsetzung eines Dienstes (S) nach Anspruch 1, ferner aufweisend einen Schritt des Umsetzens, durch das zweite Endgerät, einer Verzögerung beim Bewerten eines Ausdrucks (Ei) der zweiten Unterregel.

8. Verfahren zur Umsetzung eines Dienstes (S) nach Anspruch 1, ferner aufweisend die folgenden Schritte, die von einer Vorrichtung (T) durchgeführt werden:

   - Erkennen (E0) der Kapazitäten des ersten Endgeräts und der Kapazitäten des zweiten Endgeräts (MD, LS, L);
   - Erfassen (E1) der Regel (R), die den Dienst (S) beschreibt;
   - Erzeugen (E2) der ersten Unterregel und der zweiten Unterregel anhand der Regel (R), wobei die erste Unterregel und die zweite Unterregel jeweils den Kapazitäten des ersten Endgeräts und den Kapazitäten des zweiten Endgeräts (MD, LS, L) entsprechen;
   - Übertragen der ersten Unterregel und der zweiten Unterregel (SR1, SR2, SR3) an das erste Endgerät beziehungsweise das zweite Endgerät.

9. System zur Umsetzung eines Dienstes (S) in einem lokalen Netzwerk (1), wobei das System ein erstes Endgerät und ein zweites Endgerät aufweist, die geeignet sind, das Verfahren nach Anspruch 1 umzusetzen.

10. System zur Umsetzung eines Dienstes (S) nach Anspruch 9, ferner aufweisend eine Vorrichtung (T), die geeignet ist, das Verfahren nach Anspruch 8 umzusetzen.

11. Computerprogramm aufweisend Code-Anweisungen, die bei Ausführung durch einen Computer diesen dazu veranlassen, das Verfahren nach Anspruch 1 umzusetzen.

12. Computerprogramm nach Anspruch 11, ferner aufweisend Anweisungen, die bei Ausführung durch den Computer diesen dazu veranlassen, das Verfahren nach Anspruch 8 umzusetzen.

## Claims

1. Method for implementing a service (S) in a local area network (1) on a first terminal (MD, LS, L) and a second terminal which are each able to render part of the service, said service being described by at least one rule (R) comprising at least a first sub-rule and a second sub-rule, said method comprising the following steps:

   - the first terminal obtaining (E11, E21, E31) the first sub-rule (SR1, SR2, SR3), the first sub-rule comprising at least a first trigger (MVTD, f1, f2) and an expression (Ei) to be evaluated, the first trigger triggering the evaluation of the first sub-rule when a variable is positioned at a first value, the expression comprising at least one action, the evaluation of the first sub-rule comprising the switching of the variable to a second value;
   - the second terminal obtaining (E11, E21, E31) the second sub-rule (SR1, SR2, SR3), the second sub-rule comprising at least a second trigger (MVTD, f1, f2) and the expression (Ei) to be evaluated, the second trigger triggering the evaluation of the second sub-rule when the variable is positioned at the first value, the evaluation of the second sub-rule comprising the switching of the variable to the second value;
   - the first terminal receiving (E12, E22, E32) a trigger signal from the trigger broadcast over the local area network, said trigger signal being a first message (f1, f2) in which the variable is positioned at the first value;
   - the first terminal evaluating (E13-E14, E23-E26, E33-E34) said first sub-rule (SR1, SR2, SR3) and the fist terminal deactivating the trigger signal by broadcasting, over the local area network (1), a second message in which the variable is positioned at the second value;
   - the second terminal receiving the second message comprising the variable positioned at the second value, said receiving preventing the second terminal from evaluating the second sub-rule.

2. Method for implementing a service (S) according to Claim 1, said method further comprising, prior to receiving the first sub-rule, a step of transmitting (E10, E20, E30) the capabilities of the first terminal, the first sub-rule being linked to said capabilities of the first terminal, and said method further comprising, prior to receiving the second sub-rule, a step of transmitting (E10, E20, E30) the capabilities of the second terminal, the second sub-rule being linked to said capabilities of the second terminal.

3. Method for implementing a service (S) according to Claim 1, according to which the rule (R) further comprises a third sub-rule, the trigger signal of which is a local physical event (MVTD).

4. Method for implementing a service (S) according to Claim 1, according to which the variable is a Boolean variable, the first value is "one" or "true" and the second value of "zero" or "false".

5. Method for implementing a service (S) according to Claim 1, further comprising a step for concatenating two sub-rules during the evaluation of an expression (Ei) .

6. Method for implementing a service (S) according to Claim 1, further comprising a step of generating (E14, E26) a second trigger signal (*"f2=true"*) during the evaluation of an expression (Ei).

7. Method for implementing a service (S) according to Claim 1, further comprising a step of the second terminal implementing a time delay during the evaluation of an expression (Ei) of the second sub-rule.

8. Method for implementing a service (S) according to Claim 1, further comprising the following steps performed by a device (T):

   - discovering (E0) the capabilities of the first terminal and the capabilities of the second terminal (MD, LS, L);
   - acquiring (EI) the rule (R) describing the service (S);
   - generating (E2) the first sub-rule and the second sub-rule on the basis of the rule (R), the first sub-rule and the second sub-rule corresponding, respectively, to the capabilities of the first terminal and, to the capabilities of the second terminal (MD, LS, L);
   - transmitting the first sub-rule and the second sub-rule (SR1, SR2, SR3) to the first terminal and to the second terminal, respectively.

9. System for implementing a service (S) in a local area network (1), said system comprising a first terminal and a second terminal suitable for implementing the method according to Claim 1.

10. System for implementing a service (S) according to Claim 9, further comprising a device (T) suitable for implementing the method according to Claim 8.

11. Computer program comprising code instructions which, when they are executed by a computer, result in the latter implementing the method according to Claim 1.

12. Computer program according to Claim 11, further comprising instructions which, when they are executed by the computer, result in the latter implementing the method according to Claim 8.

**FIGURE 1**

MD, LS, L

**FIGURE 2**

T

**FIGURE 3**

**FIGURE 4**

| T/<br>SR | T1 | T2 | T3 |
|:---:|:---:|:---:|:---:|
| E0 | x | | x |
| E1 | x | x | |
| E2 | x | | |
| E3 | | x | x |

# FIGURE 5

**EP 3 391 623 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014118123 A1
- US 2015046534 A1